# EUROPÄISCHE PATENTANMELDUNG

(11) **EP 2 476 548 A1**
(43) Veröffentlichungstag der Anmeldung: **18.07.2012**
(21) Anmeldenummer: 12000020.3
(22) Anmeldetag: 03.01.2012
(51) Int. Cl.: B32B 1/08, B32B 25/02, B32B 25/14, F16L 11/02, F16L 11/08

(54) **Betriebsstoffleitung für Kraftfahrzeuge mit Faserverbundschicht**

(30) Priorität: 14.01.2011 DE 102011008573
(71) Anmelder: VERITAS AG, 63571 Gelnhausen (DE)
(72) Erfinder: Kreß, Torsten, 36119 Neuhof (DE); Manusch, Volker, 63594 Hasselroth (DE)
(74) Vertreter: Grünecker, Kinkeldey, Stockmair & Schwanhäusser

(57) **Zusammenfassung**

Die Erfindung betrifft eine Betriebsstoffleitung für Kraftfahrzeuge, umfassend eine Faserverbundschicht. Um eine verbesserte Betriebsstoffleitung bereit zu stellen, die gegenüber mechanischen Einwirkungen anderer Komponenten oder Fahrzeugteile beständiger ist als eine herkömmliche Betriebsstoffleitung, umfasst die erfindungsgemäße Betriebsstoffleitung eine Faserverbundschicht mit einer Matrix aus Acryllatex und einem Textil.

## Beschreibung

Die Erfindung betrifft eine Betriebsstoffleitung für Kraftfahrzeuge, umfassend eine Faserverbundschicht.

Als Betriebsstoffe für Kraftfahrzeuge werden alle Stoffe bezeichnet, die benötigt werden, um einen Motor in Betrieb zu halten. Zu diesen gehören natürlich an erster Stelle der Kraftstoff, die Schmierstoffe, hauptsächlich Öl und die Kühlmittel. Eine Betriebsstoffleitung ist eine Leitung, die speziell für diese Betriebsstoffe ausgelegt ist. Dazu ist die Leitung vorzugsweise diffusionsdicht im Hinblick auf den in der Leitung geförderten Betriebsstoff ausgelegt. Nach einer Gestaltungsform ist die Betriebsstoffleitung als Kraftstoffleitung oder als Leckölleitung ausgebildet. Leckölleitungen werden insbesondere in Dieselfahrzeugen eingesetzt, um die Einspritzdüsen miteinander zu verbinden und um den nicht eingespritzten Diesel von der letzten Düse über ein T-Stück zwischen Dieselfilter und Tank in den Hochdruckkreis zurück zu führen. Die Leckölleitungen dienen zudem der Schmierung der Düsennadeln der Einspritzdüsen.

Leckölleitungen werden gerne porös und verlieren besonders an den Endbereichen, die auf die Einspritzdüsen aufgesteckt sind, an Festigkeit. Die Gewebeummantelung wird rissig und die Leitung wird instabil. Dabei kann Kraftstoff austreten, der nicht nur den Motorraum verdreckt, sondern auch unangenehm riecht. Weiterhin sorgt eine Undichtigkeit an dieser Stelle dafür, dass bei stillstehendem Motor Luft in die Rücklaufleitung eintritt und damit die im Vor- und Rücklauf stehende Kraftstoffsäule in den Tank zurück fließt. Das kann beim nächsten Start dann für Startschwierigkeiten sorgen.

Die Instabilität der Leitungen ist nicht alleine auf Alterungseffekte des Materials zurück zu führen, sondern auch auf die mechanische Einwirkung anderer Komponenten oder Fahrzeugteile, die im Betrieb des Kraftfahrzeugs aneinander reiben und scheuern. Da der verfügbare Bauraum für Antriebskomponenten in der Fahrzeugkarosserie immer geringer wird, ist eine Zunahme dieses Effekts zu befürchten.

Der Erfindung liegt die Aufgabe zugrunde, eine verbesserte Betriebsstoffleitung für Kraftfahrzeuge bereit zu stellen, die gegenüber mechanischer Einwirkung anderer Komponenten oder Fahrzeugteile beständiger ist als eine herkömmliche Betriebsstoffleitung.

Zur Lösung dieser Aufgabe stellt die Erfindung eine Betriebsstoffleitung nach Anspruch 1 bereit, umfassend eine Faserverbundschicht mit einer Matrix aus Acryllatex und einem Textil. Ein Textil im Sinne der Erfindung ist ein vorzugsweise flexibler Verbund von Fasern. Nach einer Gestaltungsform umfasst das Textil Einzelfasern und/oder Garne und/oder Rovings, vorzugsweise enthaltend oder bestehend aus Glas, Metall und/oder Kunststoff, bevorzugt enthaltend oder bestehend aus Polyethylenterephthalat (PET), Polyphenylensulfid (PPS), Aramid, Polyamid (PA), insbesondere Nylon (PA 6,6) etc. Die Faserverbundschicht aus einem mit Acryllatex imprägnierten Textil ist besonders strapazierfähig, scheuerbeständig und bildet damit eine besonders beständige Schutzschicht gegenüber mechanischen Einwirkungen anderer Komponenten oder Fahrzeugteile im Betrieb des Kraftfahrzeugs. Die Fasern können in einer oder mehreren bestimmten Richtungen verlaufen bzw. Vorzugsrichtungen haben und in einer oder mehreren Schichten angeordnet sein. Die Matrix aus Acryllatex übernimmt eine Klebefunktion, um das Textil positionssicher gegenüber einer angrenzenden Schicht der Betriebsstoffleitung zu positionieren und um einen beständigen Materialverbund zu gewährleisten. Nach einer Gestaltungsform liegt der Innendurchmesser der Betriebsstoffleitung im Bereich von 1 bis 10 mm, vorzugsweise im Bereich von 2 bis 5 mm, bevorzugt bei 3,2 mm. Nach einer Gestaltungsform liegt der Außendurchmesser der Betriebsstoffleitung im Bereich von 3 bis 20 mm, vorzugsweise im Bereich von 5 bis 10 mm, bevorzugt bei 8,5 mm. Nach einer Gestaltungsform ist die Betriebsstoffleitung flexibel und/oder temperaturbeständig von -30° C bis +100° C und/oder chemisch beständig gegen Betriebsstoffe aller Art. Nach einer Gestaltungsform erfüllt die Betriebsstoffleitung die DIN 73379, insbesondere die DIN 73379-2A. Nach einer Gestaltungsform ist die Betriebsstoffleitung zumindest abschnittsweise als Glattrohr bzw. -schlauch und/oder als Wellrohr bzw. -schlauch ausgebildet.

Es kann sich als vorteilhaft erweisen, wenn das Textil als Gewebe, Gelege, Gestrick und/oder Geflecht ausgebildet ist. Nach einer Gestaltungsform ist das Textil als Rundgewebe, Rundgelege, Rundgestrick und/oder Rundgeflecht ausgebildet. Dabei bildet das Textil vorzugsweise einen flexiblen Schlauch. Durch die unterschiedlichen Eigenschaften der genannten Textilarten lassen sich die Eigenschaften der Faserverbundschicht gezielt einstellen. Ein Gewebe ist ein verhältnismäßig leichtes textiles Flächengebilde aus mindestens zwei rechtwinklig oder nahezu rechtwinklig verkreuzten Fadensystemen. Ein Gelege ist eine spezielle textile Flächenstruktur, die besonders zur Verstärkung der Faserverbundschicht geeignet ist. Im Gegensatz zu Geweben sind Gelege wesentlich besser drapierbar und haben im Verbund bessere mechanische Eigenschaften, da die Fasern in gestreckter Form vorliegen und die Ausrichtung der Fasern speziell für den jeweiligen Anwendungsfall definiert werden kann. Gewirke sind aus Fadensystemen durch Maschenbildung auf der Wirkmaschine industriell hergestellte Stoffe. Sie gehören zu den Maschenwaren. Ein Gestrick umfasst Maschen, die mit Hilfe eines Fadens sowie zweier oder mehrerer Nadeln hergestellt sind. Gestricke sind im Vergleich mit Geweben schwerer und durchsichtiger. Dafür sind sie besser drapierbar, sie passen sich Körperformen einfach an.

Es kann sich als sinnvoll erweisen, wenn die Faserverbundschicht die Außenseite der Betriebsstoffleitung bildet. An der Außenseite der Betriebsstoffleitung ist die Schutzfunktion der Faserverbundschicht am besten. Nach einer Gestaltungsform ist die Faserverbundschicht, vorzugsweise der Acryllatex, mit wenigstens einem funktionellen Zusatzstoff versetzt. Der Zusatzstoff ist vorzugsweise ausgewählt aus den Gruppen der Farbstoffe, Füllstoffe und/oder Additive.

Es kann sich als nützlich erweisen, wenn das Textil beidseitig mit identischen oder verschiedenen Acryllatices imprägniert ist. Mit identischen Acryllatices kann ein besonders fester Materialverbund bewerkstelligt werden. Durch verschiedene Acryllatices können die Eigenschaften der Faserverbundschicht gezielt beeinflusst werden.

Es kann sich als praktisch erweisen, wenn das Textil zumindest abschnittsweise, vorzugsweise vollständig, in Acryllatex eingebettet ist. Dadurch kann verhindert werden, dass sich einzelne Fasern aus dem Verbund lösen.

Es kann sich als günstig erweisen, wenn der Acryllatex stoffschlüssig mit wenigstens einer Schicht der Betriebsstoffleitung verbunden ist. Nach einer Gestaltungsform wird der Acryllatex in einem flüssigen Zustand auf einen Leitungsrohling aufgebracht. Dadurch kann ein besonders fester Materialverbund erzeugt werden.

Es kann sich als hilfreich erweisen, wenn die Betriebsstoffleitung wenigstens einen der folgenden Bestandteile aufweist:
a. eine Sperrschicht aus einem Sperrschichtmaterial, vorzugsweise aus Kunststoff oder aus Kautschuk, bevorzugt aus Fluor-Polymer-Kautschuk (FPM bzw. FKM), wobei die Sperrschicht vorzugsweise die Innenseite der Betriebsstoffleitung bildet;
b. wenigstens eine Schicht aus einem elastischen Material, vorzugsweise aus Kunststoff oder aus Kautschuk, bevorzugt aus Ethylen-Acrylat-Kautschuk (AEM), die vorzugsweise eine Zwischenschicht oder eine Deckschicht der Betriebsstoffleitung bildet;
c. einen Druckträger, der vorzugsweise als Textil, insbesondere als Gewebe, Gelege, Gestrick und/oder Geflecht ausgebildet ist, wobei der Druckträger bevorzugt aus Aramidfasern oder Polyaramidfasern besteht und/oder in eine elastische Matrix eingebettet ist, wobei die elastische Matrix vorzugsweise aus Kunststoff oder aus Kautschuk, bevorzugt aus Ethylen-Acrylat-Kautschuk (AEM) besteht.

Ein Sperrschichtmaterial ist ein Material, das in Bezug auf die in der Betriebsstoffleitung geführten Medien in hohem Masse diffusionsdicht ist. Die Sperrschicht verhindert einerseits ein Austreten von Betriebsstoffen aus der Betriebsstoffleitung und andererseits eine Versprödung der Betriebsstoffleitung durch Einwirkung der Betriebsstoffe auf die nachfolgenden Schichten. Der Begriff Druckträger bedeutet, dass die Druckfestigkeit der Betriebsstoffleitung hauptsächlich durch diesen Druckträger bestimmt ist. Eine Betriebsstoffleitung ohne Druckträger erfüllt die Anforderungen an die Druckfestigkeit in der Regel nicht. Die Zwischenschicht und/oder Deckschicht dient vorzugsweise der Lagesicherung des Druckträgers im Materialverbund.

Ein weiterer unabhängiger Aspekt der Erfindung betrifft ein Verfahren zur Herstellung einer Betriebsstoffleitung, vorzugsweise nach wenigstens einer der vorangegangenen Ausführungen, wobei das Verfahren die folgenden Schritte umfasst:
a. Bereitstellen eines Leitungsrohlings mit wenigstens einer Schicht; und
b. Aufbringen einer Faserverbundschicht mit einer Matrix aus Acryllatex und einem Textil auf den Leitungsrohling.

Es kann von Vorteil sein, wenn Schritt b die folgenden Teilschritte umfasst:
a. Aufbringen einer ersten Schicht aus flüssigem Acryllatex auf den Leitungsrohling;
b. Aufbringen des Textils auf die erste Schicht aus flüssigem Acryllatex, wobei das Textil vorzugsweise in einem kontinuierlichen Rundflechtverfahren auf die erste Schicht aus flüssigem Acryllatex aufgeflochten wird;
c. Aufbringen einer zweiten Schicht aus flüssigem Acryllatex auf das Textil, so dass der flüssige Acryllatex das Textil imprägniert; und
d. Aushärten der Schichten aus Acryllatex zur Bildung der Faserverbundschicht.

Nach dieser Gestaltungsform kann die Betriebsstoffleitung vollständig in einem kontinuierlichen Verfahren gefertigt werden.

Es kann aber auch von Vorteil sein, wenn Schritt b die folgenden Teilschritte umfasst:
a. Aufbringen eines mit Acryllatex imprägnierten Textilschlauchs auf den Leitungsrohling im flüssigen Zustand des Acryllatex; und
b. Aushärten des Acryllatex zur Bildung der Faserverbundschicht.

Der Textilschlauch ist vorzugsweise flexibel und bevorzugt als Rundgeflecht ausgeführt. Nach dieser Gestaltungsform kann die Betriebsstoffleitung beliebig konfektioniert und leicht mit verschiedenen Faserverbundschichten ausgerüstet werden.

Bevorzugte Weiterbildungen der Erfindung ergeben sich durch Kombinationen der Unteransprüche.

### Kurze Beschreibung der Zeichnung

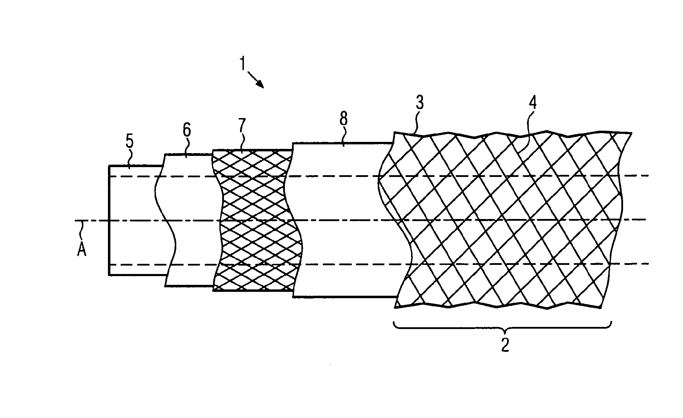

Figur 1 zeigt schematisch den Schichtaufbau der erfindungsgemäßen Betriebsstoffleitung.

### Detaillierte Beschreibung des bevorzugten Ausführungsbeispiels

Die erfindungsgemäße Betriebsstoffleitung 1 ist als Leckölleitung zur Förderung insbesondere von Dieselkraftstoff von einer Einspritzdüse zurück zu einem Hochdruckkreis ausgebildet. Der Innendurchmesser der Betriebsstoffleitung 1 beträgt beispielsweise 3,2 mm und der Außendurchmesser beträgt beispielsweise 8,5 mm.

Die erfindungsgemäße Betriebsstoffleitung 1 weist von innen nach außen den folgenden Schichtaufbau auf:
- eine Sperrschicht 5 aus einem Fluor-Polymer-Kautschuk (FPM bzw. FKM), welche die Innenseite der Betriebsstoffleitung 1 bildet;
- Eine Zwischenschicht 6 und eine Deckschicht 8 aus einem Ethylen-Acrylat-Kautschuk (AEM), zwischen denen ein als Rundgeflecht aus Aramidfasern oder Polyaramidfasern ausgebildeter Druckträger 7 eingebettet ist; und
- eine Faserverbundschicht 2 mit einer Matrix aus Acryllatex 3 und einem Glasfasertextil 4 als Schutzschicht, welche die Außenseite des Betriebsstoffleitung 1 bildet.

Das Glasfasertextil 4 ist als Rundgeflecht ausgeführt und bildet einen flexiblen Textilschlauch, der beidseitig imprägniert und vollständig in den Acryllatex 3 eingebettet ist. Der Acryllatex 3 ist stoffschlüssig mit der Deckschicht 8 verbunden.

Das bevorzugte Verfahren zu Herstellung der Betriebsstoffleitung 1 umfasst folgende Schritte:
a. Bereitstellen eines Leitungsrohlings mit einer Sperrschicht 5 aus Fluor-Polymer-Kautschuk und einem Druckträger 7 aus Aramidfasern oder Polyaramidfasern, der zwischen einer Zwischenschicht 6 und einer Deckschicht 8 jeweils aus Ethylen-Acrylat-Kautschuk eingebettet ist; und
b. Aufbringen einer Faserverbundschicht 2 mit einer Matrix aus Acryllatex 3 und einem Glasfasertextil 4 auf den Leitungsrohling.

In Schritt a wird der Leitungsrohling vorzugsweise in einem kontinuierlichen Verfahren auf einem Gummidorn gefertigt, wobei die Sperrschicht 5 und die Zwischenschicht 6 bspw. koextrudiert werden. Der Druckträger 7 wird mit einer Rundflechtmaschine auf die flüssige bzw. zähplastische Zwischenschicht 6 aufgeflochten und mit der aufextrudierten Deckschicht 8 überdeckt. Dadurch wird der Druckträger 7 in einer durch die Zwischenschicht 6 und die Deckschicht 8 gebildeten Matrix aus Ethylen-Acrylat-Kautschuk eingebettet.

Nach einer Gestaltungsform wird im Schritt b zunächst eine erste Schicht aus flüssigem Acryllatex 3 auf den Leitungsrohling aufgebracht. Dabei kann der flüssige Acryllatex 3 beispielsweise auf die Oberfläche des Leitungsrohlings aufgesprüht oder aufgestrichen werden. Möglich ist aber auch, dass der Leitungsrohling durch ein Tauchbad mit flüssigem Acryllatex 3 geführt wird. Andere Techniken zum Aufbringen der Schicht aus flüssigem Acryllatex 3 auf den Leitungsrohling sind ebenfalls vorstellbar. Anschließend wird das Glasfasertextil 4 mit einer Rundflechtmaschine auf die erste Schicht aus flüssigem Acryllatex 3 aufgeflochten, so dass der flüssige Acryllatex 3 das Glasfasertextil 4 von der Innenseite imprägniert. Anschließend wird eine zweite Schicht aus flüssigem Acryllatex 3 bspw. nach einer der oben genannten Techniken auf das Glasfasertextil 4 aufgebracht, um das Glasfasertextil 4 von der Außenseite zu imprägnieren. Anschließend werden die Schichten aus Acryllatex 3 zur Bildung der Faserverbundschicht 2 ausgehärtet. Dabei kann die Betriebsstoffleitung 1 vollständig in einem kontinuierlichen Verfahren gefertigt werden.

Nach einer alternativen Gestaltungsform wird im Schritt b ein mit Acryllatex 3 imprägnierter Textilschlauch aus einem Glasfasertextil 4 im flüssigen Zustand des Acryllatex 3 auf den Leitungsrohling aufgebracht. Dabei kann das Glasfasertextil 4 auf den Leitungsrohling aufgezogen werden oder der Leitungsrohling wird unter Aufweitung des Glasfasergeflechtsschlauchs in selbigen eingezogen. Das Glasfasertextil 4 ist bspw. als Rundgeflecht ausgebildet und weist eine ausreichende inhärente Festigkeit und Stabilität auf, um den Aufzieh- bzw. Einziehvorgang im imprägnierten Zustand schadlos zu überstehen. Der Durchmesser des Glasfasergeflechtsschlauchs ist vorzugsweise so bemessen, dass er den Leitungsrohling konturnah umgibt und sich straff an dessen Außenseite legt. Anschließend werden die Schichten aus Acryllatex 3 zur Bildung der Faserverbundschicht 2 ausgehärtet.

Nach einer Gestaltungsform liegt der Durchmesser der Fasern des Textils 4 im Bereich von 0,01 bis 1,0 mm, vorzugsweise im Bereich von 0,02 bis 0,2 mm, bevorzugt im Bereich von 0,05 bis 0,1 mm. Nach einer anderen Gestaltungsform umfasst das Textil 4 Einzelfasern aus Glas oder Verbundfasern und/oder Garne mit Glasanteil. Nach noch einer anderen Gestaltungsform liegt der Faservolumenanteil in der Faserverbundschicht 2 im Bereich von 10 bis 80%, vorzugsweise im Bereich von 50 bis 70%, bevorzugt bei 60%. Es können Fasern mit einem Vollquerschnitt und/oder einem Hohlquerschnitt eingesetzt werden.

Die erfindungsgemäße Betriebsstoffleitung 1 bietet in Gestalt der Faserverbundschicht 2 mit der Matrix aus Acryllatex 3 und dem eingebetteten Glasfasertextil 4 einen herausragenden Scheuerschutz, der die Lebensdauer der Betriebsstoffleitung 1 besonders bei starken mechanischen Einwirkungen anderer Komponenten im Betrieb eines Kraftfahrzeugs deutlich erhöhen kann.

## Patentansprüche

1. Betriebsstoffleitung (1) für Kraftfahrzeuge, umfassend eine Faserverbundschicht (2) mit einer Matrix aus Acryllatex (3) und einem Textil (4).

2. Betriebsstoffleitung (1) nach Anspruch 1, **dadurch gekennzeichnet, dass** das Textil (4) als Gewebe, Gelege, Gestrick und/oder Geflecht ausgebildet ist.

3. Betriebsstoffleitung (1) nach wenigstens einem der vorangegangenen Ansprüche, **dadurch gekennzeichnet, dass** die Faserverbundschicht (2) die Außenseite der Betriebsstoffleitung (1) bildet.

4. Betriebsstoffleitung (1) nach wenigstens einem der vorangegangenen Ansprüche, **dadurch gekennzeichnet, dass** das Textil (4) zumindest einseitig, vorzugsweise beidseitig, bevorzugt mit identischen oder verschiedenen Acryllatices imprägniert ist.

5. Betriebsstoffleitung (1) nach wenigstens einem der vorangegangenen Ansprüche, **dadurch gekennzeichnet, dass** das Textil (4) zumindest abschnittsweise, vorzugsweise vollständig, in Acryllatex (3) eingebettet ist.

6. Betriebsstoffleitung (1) nach wenigstens einem der vorangegangenen Ansprüche, **dadurch gekennzeichnet, dass** der Acryllatex (3) stoffschlüssig mit wenigstens einer Schicht (8) der Betriebsstoffleitung (1) verbunden ist.

7. Betriebsstoffleitung (1) nach wenigstens einem der vorangegangenen Ansprüche, **dadurch gekennzeichnet, dass** die Betriebsstoffleitung (1) wenigstens einen der folgenden Bestandteile aufweist:
a. eine Sperrschicht (5) aus einem Sperrschichtmaterial, vorzugsweise aus Kunststoff oder aus Kautschuk, bevorzugt aus Fluor-Polymer-Kautschuk, wobei die Sperrschicht (5) vorzugsweise die Innenseite der Betriebsstoffleitung (1) bildet;
b. wenigstens eine Schicht (6, 8) aus einem elastischen Material, vorzugsweise aus Kunststoff oder aus Kautschuk, bevorzugt aus Ethylen-Acrylat-Kautschuk, die vorzugsweise eine Zwischenschicht oder eine Deckschicht der Betriebsstoffleitung (1) bildet;
c. einen Druckträger (7), der vorzugsweise als Textil, insbesondere als Gewebe, Gelege, Gestrick und/oder Geflecht ausgebildet ist, wobei der Druckträger (7) bevorzugt aus Aramidfasern oder Polyaramidfasern besteht und/oder in eine elastische Matrix eingebettet ist, wobei die elastische Matrix vorzugsweise aus Kunststoff oder aus Kautschuk, bevorzugt aus Ethylen-Acrylat-Kautschuk besteht.

8. Verfahren zur Herstellung einer Betriebsstoffleitung (1), vorzugsweise nach wenigstens einem der vorangegangenen Ansprüche, **dadurch gekennzeichnet, dass** das Verfahren die folgenden Schritte umfasst:
a. Bereitstellen eines Leitungsrohlings mit wenigstens einer Schicht (5, 6, 7, 8); und
b. Aufbringen einer Faserverbundschicht (2) mit einer Matrix aus Acryllatex (3) und einem Textil (4) auf den Leitungsrohling.

9. Verfahren nach Anspruch 8, **dadurch gekennzeichnet, dass** Schritt b die folgenden Teilschritte umfasst:
a. Aufbringen einer ersten Schicht aus flüssigem Acryllatex (3) auf den Leitungsrohling;
b. Aufbringen des Textils (4) auf die erste Schicht aus flüssigem Acryllatex (3), wobei das Textil (4) vorzugsweise in einem kontinuierlichen Rundflechtverfahren auf die erste Schicht aus flüssigem Acryllatex (3) aufgeflochten wird;
c. Aufbringen einer zweiten Schicht aus flüssigem Acryllatex (3) auf das Textil (4), so dass der flüssige Acryllatex (3) das Textil (4) imprägniert; und
d. Aushärten der Schichten aus Acryllatex (3) zur Bildung der Faserverbundschicht (2).

10. Verfahren nach Anspruch 8, **dadurch gekennzeichnet, dass** Schritt b die folgenden Teilschritte umfasst:
a. Aufbringen eines mit Acryllatex (3) imprägnierten Textilschlauchs (4) auf den Leitungsrohling im flüssigen Zustand des Acryllatex (3); und
b. Aushärten des Acryllatex (3) zur Bildung der Faserverbundschicht (2).
